(19) **Europäisches Patentamt** / **European Patent Office** / **Office européen des brevets**

(11) **EP 1 677 093 B1**

(12) **EUROPEAN PATENT SPECIFICATION**

(45) Date of publication and mention
of the grant of the patent:
**24.09.2008 Bulletin 2008/39**

(51) Int Cl.:
*G01N 13/14* (2006.01)     *G12B 21/06* (2006.01)
*G01B 11/06* (2006.01)

(21) Application number: **05112757.9**

(22) Date of filing: **22.12.2005**

(54) **Near-field film-thickness measurement apparatus**

Nahfeldmessgerät für Filmdicke

Appareil de mesure de l'épaisseur d'un film dans le champ proche

(84) Designated Contracting States:
**DE FR GB**

(30) Priority: **28.12.2004 JP 2004380175**

(43) Date of publication of application:
**05.07.2006 Bulletin 2006/27**

(73) Proprietor: **JASCO CORPORATION**
**Hachioji-shi**
**Tokyo 192-8537 (JP)**

(72) Inventor: **Narita, Yoshihito**
**192-8537, Tokyo (JP)**

(74) Representative: **Henkel, Feiler & Hänzel**
**Patentanwälte**
**Maximiliansplatz 21**
**80333 München (DE)**

(56) References cited:
**EP-A- 1 205 939**

• **PATENT ABSTRACTS OF JAPAN vol. 2003, no. 12, 5 December 2003 (2003-12-05) -& JP 2004 264118 A (TOYOTA MOTOR CORP), 24 September 2004 (2004-09-24)**
• **YASUSHI INOUYE ET AL: "NEAR-FIELD SCANNING OPTICAL MICROSCOPE WITH A METALLIC PROBE TIP" OPTICS LETTERS, OSA, OPTICAL SOCIETY OF AMERICA, WASHINGTON, DC, US, vol. 19, no. 3, 1 February 1994 (1994-02-01), pages 159-161, XP000424356 ISSN: 0146-9592**
• **GOLDNER LORI S ET AL: "Newton’s rings in near-field optics" APPLIED PHYSICS LETTERS, AIP, AMERICAN INSTITUTE OF PHYSICS, MELVILLE, NY, US, vol. 78, no. 5, 29 January 2001 (2001-01-29), pages 583-585, XP012028497 ISSN: 0003-6951**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**RELATED APPLICATIONS**

This application claims priority to the Japanese Patent Application 2004-380175 dated on December 28, 2004.

**BACKGOUND OF THE INVENTION**

**FIELD OF THE INVENTION**

The present invention relates to film-thickness measurement apparatuses, and in particular to an improvement in the spatial resolution thereof.

**DESCRIPTION OF THE RELATED ART**

There have been conventionally used film-thickness measurement apparatuses for non-contact, non-destructive measurement of the film thickness of film samples using optical interference. Such apparatuses use microscope spectrometers and so forth to measure the interference spectrum due to light reflected from the front surface and rear surface of the film and obtain the film thickness (for example, see Japanese Unexamined Patent Application Publication No. H05-302816 and Japanese Unexamined Patent Application Publication No. H07-4922). For instance, the film thickness d can be calculated from the waveform of the interference spectrum based on equation (1) below.

$$d = \frac{N}{2\sqrt{n^2 - \sin^2\theta} \cdot \Delta v} \qquad (1)$$

wherein, $\Delta v$ (=$v_2 - v_1$) is the difference between the wave number $v_1$ at a peak (maximal point) in the interference spectrum and the wave number $v_2$ at a different peak (maximal point), N is the number of valleys (minimal points) included between the wave numbers $v_1$ and $v_2$, n is the refractive index of the film sample, and $\theta$ is the angle of incidence of the light.

The film-thickness measurement apparatuses described above are not capable of performing measurement at a scale smaller than the wavelength of the light used for measurement, as standard optical measurement apparatuses. In other words, like other optical measurement apparatuses, the spatial resolution is limited by the diffraction limit of light. Accordingly, as disclosed in Japanese Unexamined Patent Application Publication No. 2004-264118, a film-thickness measurement apparatus using near-field optics has been proposed.

The apparatus disclosed in Japanese Unexamined Patent Application Publication No. 2004-264118 performs measurement in a so-called illumination-collection mode using an aperture-type near-field probe. That is, near-field light is emitted from a minute aperture in the probe to illuminate the sample, and scattered light due to the interaction between the near-field light and the sample passes through the aperture again and is collected.

However, when performing interference measurement with the apparatus using the aperture-type probe disclosed in Japanese Unexamined Patent Application Publication No. 2004-264118, simple reflected light from the aperture portion of the probe or a connection part for connecting the probe and an optical fiber and simple reflected light from the upper surface and the lower surface of the thin-film serving as the object under measurement enter the detector. In general, such simple reflected light, particularly the simple reflected light from the probe aperture or the connection part of the optical fiber, is several orders of magnitude more intense than the interference light from the thin film serving as the object under measurement, and therefore, the detection sensitivity of the interference light is drastically reduced. In addition, because interference light generated at an angle with respect to the film is also detected, the measurement accuracy of the film thickness is further reduced.

**SUMMARY OF THE INVENTION**

The present invention has been conceived in light of the problems described above, and an object thereof is to provide a near-field film-thickness measurement apparatus having a spatial resolution at or below the wavelength of light and having sufficient film-thickness measurement precision.

A near-field film-thickness measurement apparatus of the present invention comprises a scattering near-field probe, a light source, a detector, a spectroscope disposed in an optical path between the light source and the detector, and a film-thickness calculating unit. The light source emits excitation light for generating near-field light at a tip of the near-field probe and/or at a surface of a film sample. The detector detects, as measurement light, scattered light generated by bringing the tip of the near-field probe and the surface of the film sample close to the region of the near-field light. The spectroscope performs spectrometry in a predetermined range of wave numbers. The film-thickness calculating unit calculates the film thickness of the film sample based on spectral information obtained from the measurement light detected at the detector.

In the near-field film-thickness measurement apparatus of the present invention, it is preferable that the apparatus further comprises a moving mechanism for moving the position of the tip of the near-field probe over a measurement surface of the film sample to change the measurement position and measure the film-thickness distribution of the film sample.

In the near-field film-thickness measurement apparatus of the present invention, it is preferable that the detector is disposed at the position of a dark field with respect to the positional relationship between the light source and the tip of the near-field probe.

## BRIEF DESCRIPTION OF THE DRAWINGS

Fig. 1 roughly shows the configuration of a near-field film-thickness measurement apparatus according to an embodiment of the present invention.

Fig. 2 is a diagram depicting film-thickness measurement using near-field light.

Fig. 3 is a sketchy graph showing an interference spectrum.

Fig. 4 is a diagram depicting the optical alignment of the near-field film-thickness measurement apparatus according to the present embodiment.

Fig. 5 is a graph showing the results obtained by measuring a film-thickness distribution with the near-field film-thickness measurement apparatus according to the present embodiment.

Figs. 6A, 6B, and 6C are graphs showing the spectra obtained at different positions of a film sample.

## DESCRIPTION OF THE PREFERRED EMBODIMENT

A preferred embodiment of the present invention will be described below with reference to the drawings.

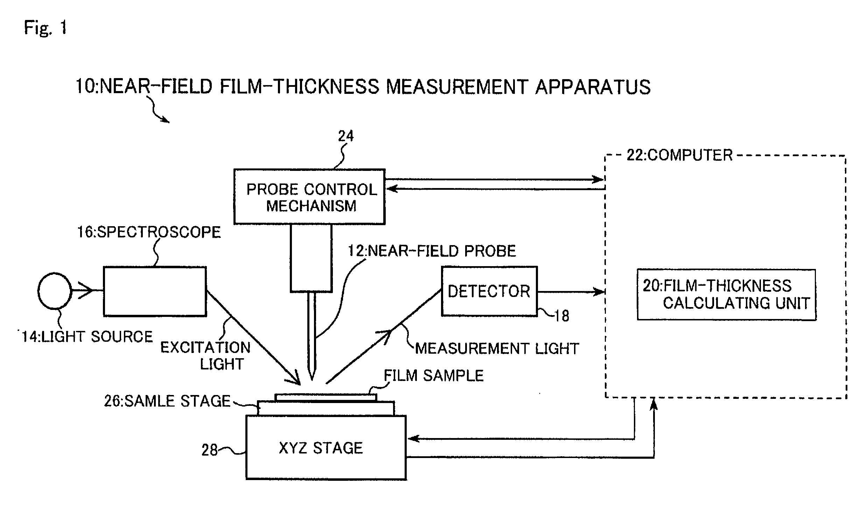

Fig. 1 roughly shows the configuration of a film-thickness measurement apparatus 10 according to an embodiment of the present invention. The film-thickness measurement apparatus 10 in Fig. 1 includes a scattering near-field probe 12, a light source 14 for emitting excitation light for generating a near-field, a spectroscope 16 for wavelength scanning, a detector 18 for detecting the light scattered by the tip of the near-field probe 12 as measurement light, and a film-thickness calculating unit 20 for calculating the film thickness of a film sample from the spectrum of the measurement light.

The excitation light emitted from the light source 14 passes through the spectroscope 16 for wavelength scanning and irradiates the tip of the near-field probe 12 and/or the surface of the film sample. Near-field light that is localized near the tip of the near-field probe 12 and/or on the surface of the film sample is generated by the irradiated excitation light. The tip of the near-field probe 12 is brought close to the surface of the film sample so that the surface of the film sample is located within the near-field region generated in the vicinity of the tip of the near-field probe 12 or so that the tip of the near-field probe 12 is located within the near-field region generated in the vicinity of the surface of the sample film, and the measurement light generated by scattering of the near-field light is detected with the detector 18. A signal from the detector 18 is sent to a computer 22, and the film thickness of the film sample is obtained by the film-thickness calculating unit 20 inside the computer 22 from the spectral information of the measurement light. In the present embodiment, the film-thickness calculating unit 20 is realized by a program that the computer 22 executes.

The near-field probe 12, which is of the scattering type, is tapered at the tip thereof so that the radius of curvature of the tip is equal to or less than the wavelength of light. A probe formed of dielectric material or metal, or a probe formed by processing an optical fiber or the like to coat a metallic film, such as a gold film, on the surface thereof is generally used.

The distance between the tip of the near-field probe 12 and the sample surface is controlled using a probe control mechanism 24. This distance control is carried out based on shear-force control or the like.

In the present embodiment, an infrared light source is used as the light source 14, an interferometer is used as the spectroscope 16, and Fourier transform spectrometry is employed. However, the present embodiment is not limited thereto, and another type of spectroscope may be used. Furthermore, although the present embodiment has a configuration in which the spectroscope 16 is disposed in the optical path between the light source 14 and the film sample, it may have a configuration in which the spectroscope 16 is disposed in the optical path between the film sample and the detector 18.

It is preferable to use an incoherent light source (for example, an incandescent light source or a halogen light source) as the light source 14. Use of a coherent light source, such as a pulsed laser, may cause problems such as burning of the sample, if the sample is an ordinary organic material, because the light intensity of the pulses is extremely high. With an incoherent light source, however, such problems do not arise, and it is thus possible to carry out non-contact, non-destructive measurement regardless of the type of sample.

The measurement light from the vicinity of the tip of the near-field probe 12 is detected by the detector 18, and the detection signal is sent to the computer 22. In the computer 22, the detection signal (interferogram data) is Fourier transformed to obtain spectral data for the measurement light. Based on this spectral data, the film thickness of the sample is determined in the film-thickness calculating unit 20.

The film sample is mounted on a sample stage 26. The sample stage 26 is mounted on an XYZ stage (moving mechanism) 28 for moving the tip position of the near-field probe 12 over the surface of the film sample. A film-thickness distribution is measured by moving the tip position of the near-field probe 12 to change the measurement position on the surface of the film sample.

Although the embodiment described above has a reflection configuration in which the excitation light is irradiated onto the tip of the near-field probe 12 and/or the surface of the sample from the same side as the near-field probe 12, the embodiment is not limited to this configuration. For example, a transmission configuration in which the tip of the near-field probe 12 is illuminated from the rear surface of the sample or a total-reflection transmission configuration in which the tip of the near-field probe 12 is illuminated by total reflection from the rear surface of the sample may be used.

An outlined configuration of the present embodiment has been described above; a description of the operation thereof will now be given below.

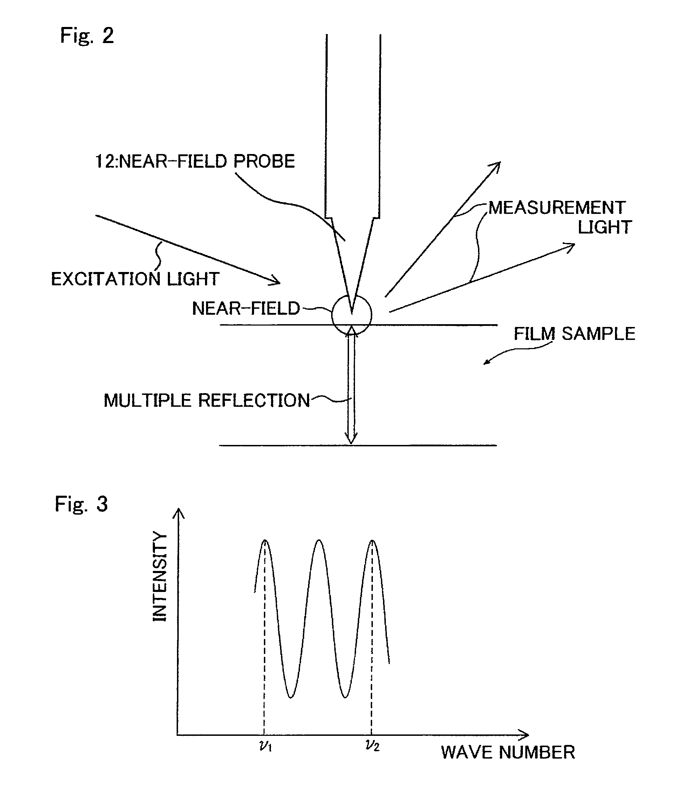

When the tip of the near-field probe 12 tapers to a size equal to or less than the wavelength of light and light is irradiated, near-field light that is localized at the tip portion is generated. As shown in Fig. 2, when the near-field probe 12 is brought close to the surface of the film sample and the surface of the film sample enters the near-field region at the tip, the near-field light in the vicinity of the probe tip is scattered and is converted to light that can propagate. This propagating light is oriented in all directions, but of this light, only the light propagating directly downwards (that is, in the direction perpendicular to the film sample) the near-field probe 12 experiences multiple reflections inside the film sample (at the upper and lower surfaces of the film sample), as indicated by the double-sided arrow in Fig. 2. As a result, light leaking out from the film surface (near-field light) is re-scattered at the tip of the near-field probe 12 and is directed towards the detector 18. This light is detected by the detector 18 as measurement light. This measurement light includes information about the light that underwent repeated multiple reflections in the vertical direction inside the film; therefore, by analyzing its spectrum, it is possible to obtain information about the film thickness. Furthermore, among the propagating light described above, the light which is not normal to the film sample is repeatedly reflected inside the film sample but does not reach the detector 18.

The measurement light described above is detected at the detector 18, and the detection signal is sent to the computer 22. In the computer 22, predetermined data processing is performed on the detection signal to obtain the spectrum of the measurement light, as described above. Then, the film thickness of the film sample is determined by the film-thickness calculating unit 20 from the spectral information. In other words, predetermined filtering processing is carried out on the measurement light spectrum to extract an interference spectrum component, and the film thickness is determined from the period of this interference spectrum. The calculation of the film thickness described above may be based on known techniques in the art (for example, see Japanese Unexamined Patent Application Publication No. H05-302816 and Japanese Unexamined Patent Application Publication No. H07-4922). For example, the film thickness is obtained from the interference spectrum shown roughly in Fig. 3 using the expression shown in equation (1) above. As explained above, the angle of incidence θ can be set to zero. Therefore, the film thickness d can be obtained from equation (2) shown below.

$$d = \frac{N}{2n \cdot \Delta v} \qquad\qquad (2)$$

where, $\Delta v$ $(=v_2-v_1)$ is the difference between the wave number $v_1$ at a peak (maximal point) in the interference spectrum and the wave number $v_2$ at a different peak (maximal point), N is the number of valleys (minimal points) between the wave numbers $v_1$ and $v_2$ described above, and n is the refractive index of the film sample.

With an apparatus using an aperture-type probe, as described in Japanese Unexamined Patent Application Publication No. 2004-264118, there is an excessive drop in detection sensitivity of the interference light due to the background (for example, simple reflected light from the probe aperture or the like, simple reflected light from a connecting portion between the probe and an optical fiber for guiding light thereto, and simple reflected light from the film sample) and there is a drop in measurement accuracy of the film thickness caused by detecting the interference light due to light incident at an angle with respect to the film (light other than normally incident light).

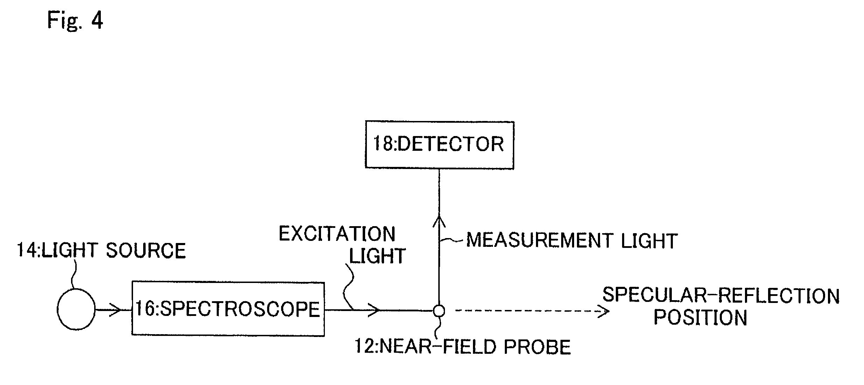

In order to overcome the problems with such an apparatus using an aperture-type probe, a scattering probe is used in the present embodiment, and furthermore, by suitably designing the optical alignment, the above-described background can be significantly reduced. Fig. 4 is a diagram depicting the optical alignment of the near-field film-thickness measurement apparatus of the present embodiment. Fig. 4 shows the optical alignment of the light source 14 (and the spectroscope 16), the near-field probe 12, and the detector 18, as viewed from the probe axis direction. The problems described above occur when the light source, the probe tip, and the detector are aligned in a straight line. For example, in Japanese Unexamined Patent Application Publication No. 2004-264118, an aperture portion of the probe functions as both an illumination part and a light-collecting part (detector), and the probe aperture (illumination part), the film sample, and the probe aperture (light-collecting part) are arranged in a straight line. In contrast, in the present embodiment, the detector 18 is disposed at a dark field position with respect to the positional relationship between the light source 14 and the tip of the near-field probe 12, as shown in Fig. 4. That is, the detector 18 is disposed such that the light source 14 and the detector 18 are not in a specular-reflection positional relationship with respect to the film sample (or the tip of the near-field probe 12). When using a transmission configuration in which the excitation light is irradiated from the rear surface of the sample, the detector 18 needs to be disposed at a position where the light transmitted through the film sample is not directly incident on the detector 18. In the present embodiment, as shown in Fig. 4, viewed from the probe axis direction, the detector 18 is disposed so that the line joining the detector 18 and the tip of the near-field probe 12 is perpendicular to the line joining the light source 14 and the tip of the near-field probe 12. With such a configuration, the background does not enter the detector 18, and therefore, it is possible to detect, with good sensitivity, only the measurement light, containing interference information, which is generated in the vicinity of the tip of the near-field probe 12. Furthermore, interference light that departs from the direction orthogonal to the film does not enter the detector 18, and therefore, only interference light in exactly the normal-incidence direction with respect to the film is detected (with a degree of angular error allowed for in the magnitude of the radius of curvature of the probe tip). As a result, the film thickness can be measured with superior accuracy.

Furthermore, in the present embodiment, there is no limit to the range of wave numbers transmittable by the optical fibers, which is likely to be imposed on aperture-type probes, and it is possible to obtain the spectrum over a wide range of wave numbers. More specifically, for a small film thickness, the interference period of the interference spectrum is long, it may be unable to measure it in the range of measurement wave numbers of the aperture-type probes. However, with a scattering probe such as that used in the present embodiment, because it is possible to measure the interference spectrum over a wide range of wavelengths, there is no such restriction.

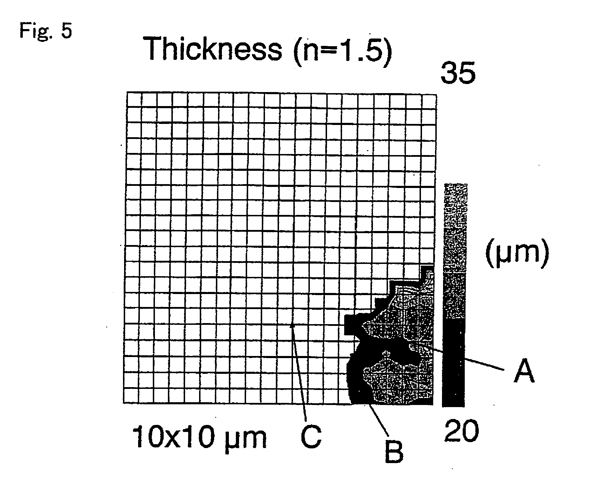

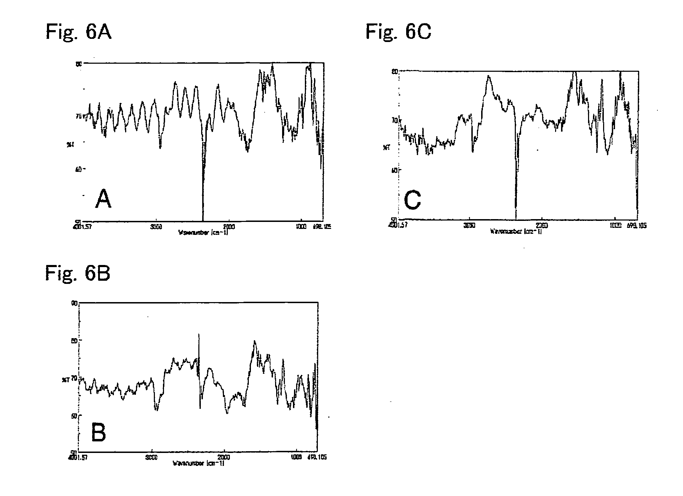

Fig. 5 is a mapping diagram showing the results of measuring the film-thickness distribution with the near-field film-thickness measurement apparatus described above. The film-thickness distribution is displayed in a color-coded manner. Figs. 6A, 6B, and 6C show measurement spectra obtained at points A, B, and C, respectively, in the mapping diagram in Fig. 5. The mapping diagram in Fig. 5 shows the film-thickness distribution in a 10x10 μm region of the surface of the film sample, in which mica particles are dispersed in an organic solvent. An interference spectrum is extracted from the spectrum for each point (see Figs. 6A to 6C), and the film thickness is calculated assuming an average refractive index n of 1.5 for the film sample. As can be understood from this mapping diagram, the spatial resolution is of the same order as the diameter of the probe tip, and it is possible to measure the film-thickness distribution with a high spatial resolution of several micrometers or less, which is smaller than the wavelength of the light used.

As described above, according to the apparatus of the present embodiment, using near-field optics enables measurement of the film-thickness distribution with a spatial resolution exceeding the diffraction limit of light. Furthermore, with the present embodiment, because a scattering near-field probe is employed, it is possible to perform film-thickness measurement with superior accuracy.

**Claims**

1.  A near-field film-thickness measurement apparatus comprising:

> a near-field probe (12);
> a light source (14) for emitting excitation light for generating near-field light at a tip of the near-field probe (12) and/or at a surface of a film sample;
> a detector (18) for collecting and detecting, as measurement light, scattered light generated by bringing the tip of the near-field probe (12) and the surface of the film sample close to the region of the near-field light;
> a spectroscope (16), disposed in an optical path between the light source (14) and the detector (18), for performing spectrometry in a predetermined range of wave numbers; and
> a film-thickness calculating unit (20) for calculating the film thickness of the film sample based on spectral information obtained from the measurement light detected at the detector (18);

> **characterized in that**
> said near field probe (12) is of the scattering type.

2. A near-field film-thickness measurement apparatus according to Claim 1, **characterized by** further comprising a moving mechanism (24) for moving the position of the tip of the near-field probe (12) over a measurement surface of the film sample to change the measurement position and measure the film-thickness distribution of the film sample.

3. A near-field film-thickness measurement apparatus according to Claim 1, **characterized in that** the detector (18) is disposed at the position of a dark field with respect to the positional relationship between the light source (14) and the tip of the near-field probe (12).

**Patentansprüche**

1. Nahfeldfilmdickenmessvorrichtung, mit:

    einer Nahfeldsonde (12):

        einer Lichtquelle (14), um Anregungslicht zum Erzeugen von Nahfeldlicht an einer Spitze der Nahfeldsonde (12) und/oder an einer Oberfläche einer Filmprobe zu erzeugen;
        einem Detektor (18), um gestreutes Licht als Messlicht zu sammeln und zu erfassen, das erzeugt wird, indem die Spitze der Nahfeldsonde (12) und die Oberfläche der Filmprobe in die Nähe der Region des Nahfeldlichtes gebracht wird;
        einem Spektroskop (16), das in einem optischen Weg zwischen der Lichtquelle (14) und dem Detektor (18) angebracht ist, um Spektroskopie in einem vorbestimmten Bereich von Wellenzahlen durchzuführen; und
        einer Filmdickenberechnungseinheit (20), um die Filmdicke der Filmprobe basierend auf spektraler Information zu berechnen, die von dem bei dem Detektor (18) erfassten Messlicht erhalten wird;

    **dadurch gekennzeichnet, dass**
    die Nahfeldprobe (12) vom Streutyp ist.

2. Nahfeldfilmdickenmessvorrichtung gemäß Anspruch 1, ferner **gekennzeichnet durch** einen Bewegungsmechanismus (24) zum Bewegen der Position der Spitze der Nahfeldsonde (12) über eine Messoberfläche der Filmprobe, um die Messposition zu ändern und die Filmdickenverteilung der Filmprobe zu messen.

3. Nahfeldfilmdickenmessvorrichtung gemäß Anspruch 1, **dadurch gekennzeichnet, dass** der Detektor (18) an der Position eines Dunkelfeldes mit Bezug auf die Positionsbeziehung zwischen der Lichtquelle (14) und der Spitze der Nahfeldsonde (12) angeordnet ist.

**Revendications**

1. Dispositif de mesure d'épaisseur de film par champ proche comprenant :

    une sonde de champ proche (12) ;
    une source de lumière (14) pour émettre une lumière d'excitation pour générer une lumière de champ proche à une extrémité de la sonde de champ proche (12) et/ou au niveau d'une surface d'un échantillon de film ;
    un détecteur (18) pour recueillir et détecter, en tant que lumière de mesure, une lumière diffusée générée en amenant l'extrémité de la sonde de champ proche (12) et la surface de l'échantillon du film à proximité de la région de la lumière de champ proche ;
    un spectroscope (16), disposé dans un trajet optique entre la source de lumière (14) et le détecteur (18), pour effectuer de la spectrométrie dans une plage prédéterminée de nombres d'onde ; et
    une unité de calcul d'épaisseur de film (20) pour calculer l'épaisseur de film de l'échantillon du film sur la base d'informations spectrales obtenues à partir de la lumière de mesure détectée au niveau du détecteur (18) ;

    **caractérisé en ce que**
    ladite sonde de champ proche (12) est du type à diffusion.

2. Dispositif de mesure d'épaisseur de film par champ proche selon la revendication 1, **caractérisé en ce qu'**il comprend en outre un mécanisme de déplacement (24) pour déplacer la position de l'extrémité de la sonde de champ proche (12) sur une surface de mesure de l'échantillon du film pour modifier la position de mesure et mesurer la distribution de l'épaisseur de film de l'échantillon du film.

3. Dispositif de mesure d'épaisseur de film par champ proche selon la revendication 1, **caractérisé en ce que** le détecteur (18) est disposé à la position d'un fond sombre par rapport à la relation de position entre la source de lumière (14) et l'extrémité de la sonde de champ proche (12).

Fig. 1

10:NEAR-FIELD FILM-THICKNESS MEASUREMENT APPARATUS

24

PROBE CONTROL
MECHANISM

22:COMPUTER

16:SPECTROSCOPE

12:NEAR-FIELD PROBE

DETECTOR

18

20:FILM-THICKNESS
CALCULATING UNIT

14:LIGHT SOURCE

EXCITATION
LIGHT

MEASUREMENT LIGHT

FILM SAMPLE

26:SAMLE STAGE

28

XYZ STAGE

EP 1 677 093 B1

Fig. 2

Fig. 3

Fig. 4

14:LIGHT SOURCE

16:SPECTROSCOPE

EXCITATION LIGHT

18:DETECTOR

MEASUREMENT LIGHT

12:NEAR-FIELD PROBE

SPECULAR-REFLECTION POSITION

EP 1 677 093 B1

Fig. 5

Thickness (n=1.5)

35

(μm)

10x10 μm    C

B

20

A

Fig. 6A

Fig. 6C

Fig. 6B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004380175 A
- JP H05302816 A
- JP H074922 A

- JP 2004264118 A